(19) Europäisches Patentamt / European Patent Office / Office européen des brevets

(11) **EP 3 039 287 B1**

(12) **EUROPÄISCHE PATENTSCHRIFT**

(45) Veröffentlichungstag und Bekanntmachung des Hinweises auf die Patenterteilung:
**25.09.2019  Patentblatt 2019/39**

(21) Anmeldenummer: **14755358.0**

(22) Anmeldetag: **21.08.2014**

(51) Int Cl.:
*F04B 49/02* (2006.01)  *F04B 49/20* (2006.01)
*F04B 53/10* (2006.01)  *F04B 17/04* (2006.01)
*F04B 43/04* (2006.01)  *F04B 49/06* (2006.01)
*F04B 51/00* (2006.01)  *F15B 19/00* (2006.01)
*G05B 13/04* (2006.01)

(86) Internationale Anmeldenummer:
**PCT/EP2014/067816**

(87) Internationale Veröffentlichungsnummer:
**WO 2015/028385 (05.03.2015 Gazette 2015/09)**

(54) **VERFAHREN ZUR BESTIMMUNG EINER PHYSIKALISCHEN GRÖSSE IN EINER VERDRÄNGERPUMPE**

METHOD FOR DETERMINING A PHYSICAL PARAMETER WITHIN A POSITIVE DISPLACEMENT PUMP

PROCÉDÉ POUR DÉTERMINER UNE VALEUR PHYSIQUE DANS UNE POMPE À DÉPLACEMENT POSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2013  DE 102013109410**

(43) Veröffentlichungstag der Anmeldung:
**06.07.2016  Patentblatt 2016/27**

(73) Patentinhaber: ProMinent GmbH
**69123 Heidelberg (DE)**

(72) Erfinder:
• LIU, Steven
  **67663 Kaiserslautern (DE)**
• KENNEL, Fabian
  **67663 Kaiserslautern (DE)**

(74) Vertreter: **WSL Patentanwälte Partnerschaft mbB
Kaiser-Friedrich-Ring 98
65185 Wiesbaden (DE)**

(56) Entgegenhaltungen:
**EP-A2- 2 557 287     DE-A1-102010 049 071**

• **Kasa, N.; Hirano, Y.; Kroumov, V.: "Modeling of novel type diaphragm pump", IEEE International Conference on Networking, Sensing and Control, 2009, 29. März 2009 (2009-03-29), Seiten 647-652, XP002732607, Okayama, Japan ISBN: 978-1-4244-3492-3 Gefunden im Internet: URL:http://ieeexplore.ieee.org/stamp/stamp .jsp?tp=&arnumber=4919353 [gefunden am 2014-11-17]**
• **Kroumov, V.: "Development and control of a novel type diaphragm pump using a DSP", International Conference on Advanced Mechatronic Systems (ICAMechS), 2012, 21. September 2012 (2012-09-21), Seiten 98-103, XP002732608, Tokyo, Japan ISBN: 978-0-9555293-8-2 Gefunden im Internet: URL:http://ieeexplore.ieee.org/xpl/article Details.jsp?arnumber=6329688 [gefunden am 2014-11-17]**

**Beschreibung**

Die vorliegende Erfindung betrifft ein Verfahren zur Bestimmung einer physikalischen Größe in einer Verdrängerpumpe.

Verdrängerpumpen weisen im Allgemeinen ein bewegliches Verdrängerelement auf, welches den Dosierraum begrenzt, der wiederum über Ventile mit einer Saugleitung und mit einer Druckleitung verbunden ist. Dies hat zur Folge, dass durch eine oszillierende Bewegung des Verdrängerelementes alternierend Förderfluid über die Saugleitung in den Dosierraum gesaugt und über die Druckleitung aus dem Dosierraum gedrückt werden kann. Hierzu ist ein Antrieb für die oszillierende Bewegung des Verdrängerelementes vorgesehen.

Es gibt beispielsweise elektromagnetisch angetriebene Membranpumpen, bei denen das Verdrängerelement eine Membran ist, welche zwischen zwei Extrempositionen hin- und her bewegt werden kann, wobei in der ersten Extremposition das Volumen des Dosierraums minimal ist, während in der zweiten Extremposition das Volumen des Dosierraums maximal ist. Wird daher die Membran von ihrer ersten Position in die zweite bewegt, so wird der Druck im Dosierraum abfallen, sodass Förderfluid über die Saugleitung in den Dosierraum gesaugt wird. Bei der Rückbewegung, d.h. bei der Bewegung von der zweiten in die erste Position, wird die Verbindung zur Saugleitung geschlossen, der Druck des Förderfluids wird aufgrund des sich verringernden Volumens in dem Dosierraum ansteigen, sodass das Ventil zur Druckleitung geöffnet wird und das Förderfluid in die Druckleitung gefördert wird. Durch die oszillierende Bewegung der Membran wird abwechselnd Förderfluid aus der Saugleitung in den Dosierraum gesaugt und Förderfluid aus dem Dosierraum in die Druckleitung gefördert. Der Förderfluidstrom in die Druckleitung wird auch als Dosierprofil bezeichnet. Dieses Dosierprofil wird im Wesentlichen bestimmt durch das Bewegungsprofil des Verdrängerelementes.

Bei elektromagnetisch angetriebenen Membranpumpen ist die Membran mit einem Druckstück verbunden, das meist federnd vorgespannt zumindest teilweise innerhalb eines Elektromagneten gelagert ist. Solange der Elektromagnet nicht mit einem Strom durchflossen ist, sodass in seinem Inneren kein magnetischer Fluss aufgebaut wird, sorgt die federnde Vorspannung dafür, dass das Druckstück und damit die Membran in einer vorgegebenen Position, zum Beispiel der zweiten Position, d.h. der Position, in der die Dosierkammer das größte Volumen hat, verbleibt.

Wird nun dem Elektromagneten ein Strom aufgeprägt, so bildet sich ein magnetischer Fluss aus, der das entsprechend ausgebildete Druckstück innerhalb des Elektromagneten aus seiner zweiten Position in die erste Position bringt, wodurch das im Dosierraum befindliche Förderfluid aus dem Dosierraum in die Druckleitung gefördert wird.

Mit der Aktivierung des Elektromagneten kommt es daher im Wesentlichen abrupt zu einem Hub des Dosierstückes und damit der Dosiermembran von der zweiten in die erste Position.

Typischerweise werden solche elektromagnetisch angetriebenen Membranpumpen verwendet, wenn das zu dosierende Fluidvolumen deutlich größer ist als das Dosierraumvolumen, sodass die Dosiergeschwindigkeit im Wesentlichen durch die Häufigkeit bzw. die Taktung des Stromflusses durch den Elektromagneten bestimmt wird. Soll beispielsweise die Dosiergeschwindigkeit verdoppelt werden, so wird der Elektromagnet in gleicher Zeit doppelt so häufig kurzzeitig mit einem Strom durchflossen, was wiederum zur Folge hat, dass der Bewegungszyklus der Membran doppelt so häufig stattfindet.

Eine solche Magnetdosierpumpe ist beispielsweise in der EP 1 757 809 beschrieben.

Die Verwendung solcher Magnetdosierpumpen stößt allerdings dann an ihre Grenzen, wenn nur geringe Dosiergeschwindigkeiten erforderlich sind, sodass die abrupte Dosierung eines ganzen Hubes nicht gewünscht ist.

In der genannten EP 1 757 809 ist daher bereits vorgeschlagen worden, einen Positionssensor vorzusehen, mit dem die Position des Druckstückes bzw. der damit verbundenen Membran bestimmt werden kann. Durch einen Vergleich der Ist-Position des Druckstückes mit einer vorgegebenen Soll-Position des Druckstückes kann dann eine Regelung der Bewegung erfolgen.

Durch die Regelung der Bewegung des Druckstückes lassen sich Magnetdosierpumpen auch zur Förderung von deutlich geringeren Fluidmengen einsetzen, da die Hubbewegung nicht mehr abrupt, sondern geregelt stattfindet.

Insbesondere dann, wenn die Dosiermengen sehr gering sind, spielen beispielsweise Ventilöffnungs- und Ventilschließzeitpunkte der Dosierpumpe eine wesentliche Rolle, da diese Beginn und Ende des eigentlichen Dosiervorgangs festlegen.

Darüber hinaus können Gasblasen im Hydrauliksystem und/oder Kavitationen im Pumpenkopf der Dosiereinheit die tatsächliche Dosiermenge verringern, was insbesondere bei sehr geringen Dosiermengen die Dosiergenauigkeit deutlich verringern kann.

Daher ist es prinzipiell möglich, beispielsweise den Fluiddruck in dem Dosierraum mit einem Drucksensor zu messen und aus den Messergebnissen Rückschlüsse auf Vorgänge im Dosierkopf, wie zum Beispiel Gasblasen im Hydrauliksystem, Kavitationen und/oder Überdruck im Dosierkopf, festzustellen.

Solch ein Drucksensor verteuert jedoch die Dosierpumpe, ist fehleranfällig und muss gewartet werden.

Insbesondere dann, wenn die Dosierpumpe in der Lebensmittelbranche eingesetzt werden soll, muss der Dosierraum regelmäßig sehr gründlich gereinigt werden.

Produktfluidreste sind bei der Reinigung aus allen Vertiefungen, die beispielsweise an Verbindungsstellen ent-

stehen, sorgfältig zu entfernen. Das Vorhandensein eines zusätzlichen Sensors, der mit dem Druckfluid in Kontakt ist, erhöht damit den Reinigungsaufwand, da die Verbindungsstelle zwischen Sensor und Dosierkammer zusätzlich gereinigt werden muss.

Weitere Verfahren sind bekannt aus der EP 2 557 287 A2 sowie aus Kasa et al. "Modelling of novel type diaphragm pump". S. 647 ff, IEEE International Conference on Networking, Sensing and Control, 2009.Es ist daher Aufgabe der vorliegenden Erfindung, ein Verfahren zur Bestimmung einer physikalischen Größe, z.B. des Fluiddruckes, anzugeben, mit dem diese Größe ohne Verwendung eines zusätzlichen Sensors bestimmt werden kann.

Erfindungsgemäß wird die Aufgabe durch ein Verfahren gemäß Anspruch 1 gelöst.

Unter einer Bewegungsgleichung wird eine mathematische Gleichung verstanden, die die räumliche und zeitliche Bewegung des Verdrängerelement unter Einwirkung äußerer Einflüsse beschreibt.

Die vorliegende Erfindung wird im Folgenden zunächst am Beispiel der Bestimmung des Fluiddruckes beschrieben. Die Erfindung ist jedoch nicht auf die Bestimmung des Fluiddrucks beschränkt. Weitere Beispiele werden weiter unten erläutert.

Die Messung der Position des Verdrängerelementes kann beispielsweise berührungsfrei erfolgen und wird in der Regel ohnehin bei den beschriebenen Dosierpumpen vorgenommen, sodass die Information über die aktuelle Position des Verdrängerelementes zur Verfügung steht. Die Bewegungsgleichung des Verdrängerelementes berücksichtigt alle Kräfte, die auf das Verdrängerelement einwirken. Dies ist neben der von dem Antrieb auf das Verdrängerelement aufgebrachten Kraft auch die durch den Fluiddruck im Dosierraum auf die Membran und damit auf das Verdrängerelement aufgebrachte Gegenkraft.

Daher können, wenn die von dem Antrieb auf das Verdrängerelement aufgebrachte Kraft bekannt ist, aus der Position des Verdrängerelementes, bzw. aus der daraus ableitbaren Geschwindigkeit oder Beschleunigung des Verdrängerelementes, Rückschlüsse auf den Fluiddruck im Dosierkopf gezogen werden.

In einer bevorzugten Ausführungsform ist die Verdrängerpumpe eine elektromagnetisch angetriebene Dosierpumpe, vorzugsweise eine elektromagnetisch angetriebene Membranpumpe.

In diesem Fall ist es von Vorteil, wenn neben der Position des Verdrängerelementes auch noch der Strom durch den elektromagnetischen Antrieb gemessen wird und die Differentialgleichung sowohl für die Position des Verdrängerelementes als auch für den Strom durch den elektromagnetischen Antrieb als Meßgrößen verwendet wird. In der Regel sind keine weiteren zu erfassenden Meßgrößen notwendig. Durch die Messung der Position des Verdrängerelementes und die Messung des Stroms durch den elektromagnetischen Antrieb lässt sich die Kraft auf das Verdrängerelement durch den Antrieb bestimmen und aus der Bewegung des Verdrängerelementes ist dann der Druck im Dosierkopf bestimmbar.

Beispielsweise kann, wenn der Ist-Fluiddruck einen vorgegebenen Maximalwert erreicht oder überschreitet, ein Warnsignal ausgegeben werden und das Warnsignal an eine Abschaltautomatik gesendet werden, welche in Antwort auf den Empfang des Warnsignals die Dosierpumpe abschaltet. Sollte daher aus irgendeinem Grunde ein Ventil nicht öffnen oder der Druck auf der Druckleitung stark ansteigen, kann dies durch das erfindungsgemäße Verfahren ohne Verwendung eines Drucksensors ermittelt werden und die Pumpe kann sicherheitshalber abgeschaltet werden. Im Grunde genommen übernimmt das Verdrängungselement mit dem dazugehörigen Antrieb zusätzlich die Funktion des Drucksensors.

Bei einer weiteren bevorzugten Ausführungsform des Verfahrens sind für einen Bewegungszyklus des Verdrängerelementes eine Soll-Fluiddruckkurve, eine Soll-Positionskurve des Verdrängerelementes und/oder der Soll-Stromverlauf durch den elektromagnetischen Antrieb hinterlegt. Dabei kann der Ist-Fluiddruck mit dem Soll-Fluiddruck, die Ist-Position des Verdrängerelementes mit der Soll-Position des Verdrängerelementes und/oder der Ist-Strom durch den elektromagnetischen Antrieb mit einem Soll-Strom durch den elektromagnetischen Antrieb verglichen werden und, wenn die Differenzen zwischen Ist- und Soll-Wert einen vorbestimmtes Kriterium erfüllen, ein Warnsignal ausgegeben werden.

Diesem Verfahrensschritt liegt der Gedanke zu Grunde, dass bestimmte Ereignisse, wie zum Beispiel Gasblasen im Hydrauliksystem oder Kavitation im Pumpenkopf eine erkennbare Veränderung des zu erwartenden Fluiddruckes bewirken und daher aus der Bestimmung des Fluiddruckes Rückschlüsse auf die genannten Ereignisse gezogen werden können.

Das Warnsignal kann beispielsweise eine optische Anzeige oder eine akustische Anzeige aktivieren. Alternativ oder in Kombination dazu kann das Warnsignal jedoch auch direkt einer Steuereinheit zur Verfügung gestellt werden, die entsprechende Maßnahmen in Antwort auf den Empfang des Warnsignals ergreift.

Im einfachsten Fall wird für ein oder mehrere der gemessenen bzw. bestimmten Größen die Differenz aus Ist- und Soll-Wert bestimmt und wenn eine der Differenzen einen vorbestimmten Wert überschreitet, ein Warnsignal ausgegeben.

Um jedoch die möglichen Fehlerereignisse, wie z.B. Gasblasen im Dosierraum oder Auftreten von Kavitation nicht nur zu detektieren, sondern auch noch untereinander zu unterscheiden ist es möglich, für jedes Fehlerereignis ein eigenes Kriterium zu definieren.

In einer bevorzugten Ausführungsform kann eine gewichtete Summe der relativen Abweichungen vom Soll-Wert bestimmt werden und das Kriterium derart gewählt werden, das ein Warnsignal ausgegeben wird, wenn die gewichtete Summe einen vorbestimmten Wert überschreitet.

Den unterschiedlichen Fehlerereignissen können unterschiedliche Wichtungskoeffizienten zugeordnet werden. Im Idealfall wird bei Auftreten eines Fehlerereignisses genau ein Kriterium erfüllt, so dass das Fehlerereignis diagnostiziert werden kann.

Durch das beschriebene Verfahren ist daher ohne Rückgriff auf einen Drucksensor die Bestimmung des Druckes im Dosierkopf möglich und aus dem derart bestimmten Druck können Rückschlüsse auf bestimmte Zustände im Dosierkopf gezogen werden, die dann wiederum die Einleitung bestimmter Maßnahmen auslösen können.

Mit dem erfindungsgemäßen Verfahren lassen sich Druckänderungen sehr präzise bestimmen.

In einer weiteren Ausführungsform wird daher der zeitliche Gradient einer gemessenen oder bestimmten Größe ermittelt und, falls dieser einen vorbestimmten Grenzwert überschreitet, die Ventilöffnung oder die Ventilschließung diagnostiziert.

In einer alternativen Ausführungsform wird als physikalische Größe die Masse $m$ des Verdrängerelementes, die Federkonstante k der das Verdrängerelement vorspannenden Feder, die Dämpfung d und/oder der elektrische Widerstand $R_{Cu}$ des elektromagnetischen Antriebs bestimmt.

In einer besonders bevorzugten Ausführungsform werden sogar alle der genannten Größen bestimmt. Dies kann beispielsweise durch eine Minimierungsrechnung erfolgen. Alle genannten Größen mit Ausnahme des Druckes in der Dosierkammer stellen Konstanten dar, die experimentell bestimmbar sind und sich in der Regel im Pumpbetrieb nicht ändern. Dennoch kann es zu Ermüdungserscheinungen der unterschiedlichen Elemente kommen, die den Wert der Konstanten verändern. Beispielsweise kann der gemessene Druck-Weg-Verlauf mit einem erwarteten Druck-Weg-Verlauf verglichen werden. Die über einen Zyklus integrierte Differenz aus beiden Verläufen kann durch Variation der konstanten Größen minimiert werden. Stellt man dabei z.B. fest, dass sich die Federkonstante verändert hat, kann eine defekte Feder diagnostiziert werden.

Eine solche Minimierung könnte auch im drucklosen Zustand, d.h. wenn kein Fluid in der Dosierkammer ist, durchgeführt werden.

Das erfindungsgemäße Verfahren kann in einer bevorzugten Ausführungsform weiterentwickelt werden, um die Regelung der Druckstückbewegung zu verbessern und zwar ohne dass eine vorherige Tabellierung von Regelparametern notwendig ist. Dadurch kann das mit der Verdrängerpumpe erzielbare Dosierprofil verbessert werden.

Zu diesem Zweck wird für den Antrieb des Verdrängerelementes eine modellbasierte Regelung, insbesondere eine nichtlineare modellbasierte Regelung, verwendet.

Bei einer modellbasierten Regelung wird ein möglichst vollständiges Modell der Prozessdynamik entwickelt. Mit Hilfe dieses Modells ist es dann vereinfacht gesprochen möglich, eine Vorhersage zu treffen, wohin sich die Systemgrößen im nächsten Moment bewegen werden.

Aus diesem Modell kann dann auch eine geeignete Stellgröße berechnet werden. Kennzeichen einer solchen modellbasierten Regelung ist daher die ständige Berechnung der notwendigen Stellgröße auf Basis von Messgrößen unter Verwendung der durch das Modell gegebenen Systemgrößen.

Im Grunde genommen wird durch die Modellbildung das zugrundeliegende physikalische System näherungsweise mathematisch beschrieben. Diese mathematische Beschreibung wird dann zur Berechnung der Stellgröße auf Basis der gewonnenen Messgrößen verwendet. Im Unterschied zu den bekannten Dosierprofiloptimierungsverfahren wird somit der Antrieb nicht mehr als "Black Box" angesehen. Stattdessen werden die bekannten physikalischen Zusammenhänge zur Bestimmung der Stellgröße verwendet. Hierzu kann die erfindungsgemäße Differentialgleichung des Verdrängerelementes verwendet werden.

Dabei werden in einer bevorzugten Ausführungsform in der Differentialgleichung verdrängerpumpenspezifische Kräfte, die auf das Druckstück wirken, modelliert. So kann etwa die von einer Feder auf das Druckstück ausgeübte Kraft, bzw. deren Federkonstante k, und/oder die von dem magnetischen Antrieb auf das Druckstück ausgeübte magnetische Kraft modelliert werden. Die von dem Förderfluid auf das Druckstück ausgeübte Kraft kann dann als Störgröße behandelt werden.

Durch solch ein Zustandsraummodell kann, wenn die Messgrößen erfasst sind, eine Vorhersage für das unmittelbar folgende Systemverhalten getroffen werden.

Wenn das auf diese Art prognostizierte unmittelbar folgende Verhalten von dem gewünschten vorgegebenen Verhalten abweicht, wird korrigierend auf das System Einfluss genommen.

Um zu berechnen, wie eine geeignete Einflussnahme aussieht, kann im gleichen Modell der Einfluss der verfügbaren Stellgrößen auf die Regelgröße simuliert werden. Mit Hilfe von bekannten Optimierungsverfahren kann dann adaptiv die momentan beste Regelstrategie ausgewählt werden. Alternativ dazu ist es auch möglich, auf Basis des Modells einmalig eine Regelstrategie zu bestimmen und diese dann in Abhängigkeit von den erfassten Messgrößen anzuwenden.

In einer bevorzugten Ausführungsform wird daher als Zustandsraummodell ein nichtlineares Zustandsraummodell gewählt und die nichtlineare Regelung erfolgt entweder über Control-Lyapunov-Funktionen, über flachheitsbasierte Regelungsmethoden mit flachheitsbasierter Vorsteuerung, über Integrator-Backstepping-Methoden, über Sliding-Mode-Methoden oder über prädiktive Regelung. Dabei ist die nichtlineare Regelung über Control-Lyapunov-Funktionen bevorzugt.

Alle fünf Verfahren sind aus der Mathematik bekannt und werden daher hier nicht eingehender erläutert.

Control-Lyapunov-Funktionen sind beispielsweise eine verallgemeinerte Beschreibung von Lyapunov-Funktionen. Geeignet gewählte Control-Lyapunov-Funktionen führen zu einem stabilen Verhalten im Rahmen des Modells.

Anders ausgedrückt wird eine Korrekturfunktion berechnet, die in dem zugrundeliegenden Modell zu einer stabilen Lösung des Modells führt.

Im Allgemeinen gibt es eine Vielzahl von Regelmöglichkeiten, die dazu führen, dass in dem zugrundeliegenden Modell die Differenz zwischen Ist-Profil und Soll-Profil kleiner wird.

In einer bevorzugten Ausführungsform wird das Modell, welches der modellbasierten Regelung zugrunde liegt, zur Formulierung eines Optimierungsproblems verwendet, bei dem als Nebenbedingung der Optimierung die elektrische Spannung am Elektromotor und damit die der Dosierpumpe zugeführte Energie möglichst klein wird, zugleich aber eine möglichst schnelle und wenig überschwingende Annäherung des Ist-Profil an das Soll-Profil erreicht wird. Darüber hinaus, kann es von Vorteil sein, wenn die gemessenen Signale vor der Verarbeitung im zugrundeliegenden Modell tiefpassgefiltert werden, um den Einfluss von Rauschen zu reduzieren.

In einer weiteren besonders bevorzugten Ausführungsform ist vorgesehen, dass während eines Saug-Druck-Zyklus die Differenz zwischen dem erfassten Ist-Positionsprofil des Verdrängerelementes und einem gewünschten Soll-Positionsprofil des Verdrängerelementes erfasst wird und für den nächsten Saug-Druck-Zyklus ein Soll-Positionsprofil verwendet wird, welches dem um die Differenz verminderten gewünschten Soll-Positionsprofil entspricht.

Im Grunde genommen wird hier ein selbstlernendes System verwirklicht. Zwar hat die erfindungsgemäße modellbasierte Regelung bereits zu einer deutlichen Verbesserung des Regelverhaltens geführt, dennoch kann es zu Abweichungen zwischen dem Soll-Profil und dem Ist-Profil kommen. Insbesondere bei der energieminimierenden Auswahl des Regeleingriffs ist dies nicht zu vermeiden. Um zumindest für folgende Zyklen diese Abweichung weiter zu reduzieren, wird die Abweichung während eines Zyklus erfasst und die erfasste Abweichung beim nächsten Zyklus von dem gewünschten Soll-Positionsprofil zumindest zum Teil abgezogen.

Anders ausgedrückt wird einem folgenden Druck-Saugzyklus absichtlich ein "falsches" Sollwert-Profil vorgegeben, wobei das "falsche" Sollwert-Profil aus der im vorherigen Zyklus gewonnen Erfahrung berechnet wird. Kommt es nämlich bei dem folgenden Saug-Druck-Zyklus zu exakt der gleichen Abweichung zwischen Ist- und Soll-Profil wie im vorherigen Zyklus, so führt das Verwenden des "falschen" Sollwert-Profils dazu, dass im Ergebnis das eigentlich gewünschte Sollwert-Profil erreicht wird.

Zwar ist es grundsätzlich möglich und aufgrund des periodischen Verhaltens des Systems in einigen Anwendungen auch ausreichend, die beschriebenen Selbstlernschritte nur einmal durchzuführen, das heißt beim ersten Zyklus die Differenz zu messen und ab dem zweiten und bei allen weiteren Zyklen das Sollwert-Profil entsprechend zu korrigieren. Besonders bevorzugt ist es jedoch, wenn die Differenz zwischen Ist- und Soll-Profil in regelmäßigen Abständen, am Besten bei jedem Zyklus, bestimmt wird und im Folgezyklus entsprechend berücksichtigt wird.

Selbstverständlich ist es auch möglich, lediglich einen Bruchteil der erfassten Differenz als Profilkorrektur für den folgenden oder die folgenden Zyklen zu verwenden. Dies kann insbesondere in den Fällen, in denen die erfasste Differenz sehr groß ist, von Vorteil sein, um durch die plötzliche Sollwertveränderung keine Instabilität des Systems zu erzeugen.

Weiterhin ist es möglich, die Größe des Bruchteils der erfassten Differenz, welcher als Profilkorrektur verwendet wird, anhand der aktuellen Differenz zwischen Soll- und Istprofil zu bestimmen.

Auch ist es möglich, dass die Differenz zwischen Ist- und Sollprofil über mehrere Zyklen, z. B. 2, gemessen wird und daraus eine mittlere Differenz errechnet wird, die dann zumindest zum Teil von dem Sollprofil der folgenden Zyklen abgezogen wird.

In einer weiteren alternativen Ausführungsform kann eine beliebige von der erfassten Differenz abhängige Funktion zur Korrektur des nächsten Soll-Positionsprofil verwendet werden.

In einer weiteren besonders bevorzugten Ausführungsform ist daher vorgesehen, dass auch für das hydraulische System ein physikalisches Modell mit hydraulischen Parametern aufgestellt wird und dass mit Hilfe einer Optimierungsrechnung zumindest ein hydraulischer Parameter errechnet wird.

Unter hydraulischen Parametern wird jeder Parameter des hydraulischen Systems - abgesehen von der Position des Verdrängerelementes - verstanden, der den Fluss des Förderfluids durch den Dosierraum beeinflusst.

Hydraulische Parameter sind daher z.B. die Dichte des Förderfluids im Dosierraum sowie die Viskosität des Fluids im Dosierraum. Weitere hydraulische Parameter sind beispielsweise Schlauch- bzw. Rohrlängen und -durchmesser von Schläuchen und Rohren, die mit dem Dosierraum zumindest zeitweilig verbunden sind.

Durch diese Maßnahme können hydraulische Parameter bestimmt werden, ohne dass ein zusätzlicher Sensor vorgesehen werden muss.

Es ist eine inhärente Eigenschaft der Verdrängerpumpe, dass sich das hydraulische System immer dann deutlich ändert, wenn eines der Ventile, über die der Dosierraum mit der Saug- und Druckleitung verbunden ist, geöffnet wird oder geschlossen wird.

Am einfachsten zu modellieren ist das System für den Fall, dass das Ventil zur Saugleitung geöffnet ist und das Ventil zur Druckleitung geschlossen ist. Häufig ist nämlich an dem Ventil zur Saugleitung ein flexibler Schlauch montiert, welcher in einem unter Umgebungsdruck stehenden Vorratsbehälter endet.

Dieser Zustand ist während des sogenannten Saughubes, d.h. während sich das Verdrängerelement von der zweiten Position in die erste Position bewegt, gegeben. Dieses hydraulische System könnte beispielsweise mittels der nichtlinearen Navier-Stokes-Gleichung unter Berücksichtigung laminarer und turbulenter Strömungen beschrieben werden. Neben der Dichte und der Viskosität des Förderfluids sind dann noch der Durchmesser des Schlauches, der das Saugventil mit dem Vorratsbehälter verbindet, die Länge des Schlauches sowie der Höhenunterschied, den das Fluid im Schlauch überwinden muss, als hydraulische Parameter zu beachten.

Je nach verwendetem System können weitere sinnvolle Annahmen getroffen werden. Mit Hilfe einer Optimierungsrechnung, die beispielsweise über das bekannte Gradientenverfahren oder Levenberg-Marquardt-Algorithmen, erfolgen kann, ist es möglich, die im physikalischen Modell enthaltenen hydraulischen Parameter zu bestimmen, die den Druckverlauf im Dosierkopf und die Bewegung bzw. die daraus abgeleitete Geschwindigkeit und Beschleunigung des Druckstückes am besten beschreiben.

Grundsätzlich könnte das erfindungsgemäße Bestimmungsverfahren allein durch eine wiederholte Analyse des Saughubverhaltens erfolgen.

Alternativ dazu kann jedoch auch das physikalische Modell des hydraulischen Systems für den Fall betrachtet werden, dass das Ventil zur Saugleitung geschlossen und das Ventil zur Druckleitung geöffnet ist. Da jedoch für den Pumpenhersteller in der Regel zunächst nicht bekannt ist, in welcher Umgebung die Dosierpumpe eingesetzt wird und daher auch das an das Druckventil, welches die Druckleitung mit dem Dosierraum verbindet, angeschlossene Rohrsystem nicht bekannt ist, kann hier nur eine verallgemeinerte Annahme getroffen werden. Das aufgestellte physikalische Modell kann daher ohne Kenntnis des an das Druckventil angeschlossenen Rohrleitungssystems, nicht in der Genauigkeit aufgestellt werden, wie dies für das hydraulische System während des Saughubes in der Regel möglich ist.

In einer besonders bevorzugten Ausführungsform werden physikalische Modelle für beide beschriebenen Hydrauliksysteme verwendet und dann die Ventilöffnungszeitpunkte gemessen oder bestimmt und in Abhängigkeit von dem Ergebnis der Bestimmung der Ventilöffnungszeitpunkt das jeweils zutreffende physikalische Modell ausgewählt. Im Grunde genommen wird dann das erfindungsgemäße Verfahren getrennt für den Saughub und den Druckhub durchgeführt. In beiden Fällen erhält man für die hydraulischen Parameter, wie z.B. die Dichte und die Viskosität des Förderfluids Werte, die in der Praxis nicht exakt übereinstimmen. Grundsätzlich wäre es daher möglich, die unterschiedlichen Werte zu mitteln, wobei hier unter Umständen berücksichtigt werden muss, dass aufgrund der besseren Beschreibung der tatsächlichen Situation durch das physikalische Modell während des Saughubes, der während des Saughubes gewonnene Wert bei der Mittelung stärker gewichtet wird als der während des Druckhubes ermittelte Wert.

Nachdem in der erfindungsgemäßen Art die hydraulischen Parameter bestimmt worden sind, kann das aufgestellte physikalische Modell mit den derart bestimmten hydraulischen Parametern verwendet werden, um seinerseits den Druck im Dosierraum zu bestimmen. Diese Erkenntnis kann wiederum zur Verbesserung der Bewegungsregelung des Druckstückes verwendet werden, indem die von dem Fluid auf das Druckstück ausgeübte Kraft durch die derart bestimmten hydraulischen Parameter modelliert wird.

Weitere Vorteile, Merkmale und Anwendungsmöglichkeiten werden deutlich anhand der folgenden Beschreibung einer bevorzugten Ausführungsform und den dazugehörigen Figuren. Es zeigen:

Figur 1      eine schematische Darstellung eines Druck-Weg-Diagramms und eines Weg-Zeit-Diagramms für den Normalzustand,

Figur 2      eine schematische Darstellung eines Druck-Weg-Diagramms und eines Weg-Zeit-Diagramms für einen Zustand mit Gasblasen in der Dosierkammer,

Figur 3      eine schematische Darstellung eines idealen Bewegungsprofils,

Figur 4      eine schematische Darstellung der Selbstlernfunktion,

Figur 5      eine schematische Darstellung der an die Verdrängerpumpe angeschlossenen Saugleitung und

Figuren 6a-6e      Beispiele hydraulischer Parameter und deren zeitabhängige Entwicklung.

Das erfindungsgemäße Verfahren ist im Zusammenhang mit einer Magnetdosierpumpe entwickelt worden. In einer bevorzugten Ausführungsform weist eine solche Magnetdosierpumpe ein bewegliches Druckstück mit einer fest mit diesem verbundenen Schubstange auf. Das Druckstück ist in einem im Pumpengehäuse fest verankerten Magnetmantel in der Längsachse axial beweglich gelagert, sodass das Druckstück mit Schubstange bei der elektrischen Ansteuerung der Magnetspule im Magnetmantel gegen die Wirkung einer Druckfeder in eine Bohrung des Magnetmantels hineingezogen wird und das Druckstück nach Deaktivierung des Magneten durch die Druckfeder in die Ausgangslage zurückkehrt. Dies hat zur Folge, dass das Druckstück und ein durch dieses betätigte Membran bei fortgesetzter Aktivierung und Deaktivierung der Magnetspule eine oszillierende Bewegung durchführt, die in dem in der Längsachse angeordneten Dosierkopf in Zusammenwirkung mit einem Auslass- und Einlassventil zu einem Pumphub (Druckhub) und einem Ansaughub (Saughub) führt. Die Aktivierung der Magnetspule erfolgt durch Anlegen einer Spannung an die Magnetspule. Die Bewegung des Druckstückes kann somit durch den zeitlichen Verlauf der Spannung an der Magnetspule festgelegt werden.

Es versteht sich, dass Druckhub und Saughub nicht unbedingt gleich lang andauern müssen. Da während des Saughubes keine Dosierung erfolgt, sondern lediglich der Dosierraum wieder mit Förderfluid gefüllt wird, ist es im Gegenteil von Vorteil, den Saughub in jedem Fall so schnell wie möglich durchzuführen, wobei dennoch darauf zu achten ist, dass es zu keiner Kavitation in der Druckkammer kommt.

Erfindungsgemäß wird daher ein (nicht lineares) Modell entwickelt, was den Zustand des magnetischen Systems beschreibt.

Für eine bevorzugte Ausführungsform ergibt sich das folgende Modell:

$$\dot{\mathbf{x}} = \begin{bmatrix} \dot{x} \\ \ddot{x} \\ \dot{\Phi} \end{bmatrix} = \begin{bmatrix} \dot{x} \\ \dfrac{1}{m}(-d\dot{x} - kx - F_{vor} + F_p + K_L(\delta)\Phi^2) \\ \dfrac{1}{N_1}\left(-R_{cu}\dfrac{R_{m_{ges}}(\delta,\Phi)}{N_1}\Phi + u\right) \end{bmatrix}$$

wobei

| | |
|---|---|
| m: | Masse des Druckstücks |
| $\Phi$: | magnetischer Fluss |
| $K_L(\delta)\Phi^2$: | magnetische Kraft |
| $N_1$: | Windungszahl |
| u: | Spannung |
| d: | Dämpfung |
| k: | Federkonstante |
| $F_{vor}$: | Kraft auf Druckstück durch Federvorspannung |
| $F_p$: | Kraft auf Druckstück durch Fluiddruck im Förderraum |
| $R_{m_{ges}}(\delta,\Phi)$: | magnetischer Widerstand |
| $R_{cu}$: | ohmscher Widerstand der Spule |
| x: | Position des Druckstückes |
| $\delta$: | Spaltgröße zwischen Anker und Magnet |

Dies ist ein nichtlineares Differentialgleichungssystem. Es erlaubt es, ausgehend von einem Startpunkt, eine Vorhersage über das unmittelbar folgende Verhalten des Systems zugeben.

Durch die Messung der Position des Druckstückes und des Stromes durch den Magnetantrieb ist $F_p$, d.h. die Kraft auf das Druckstück durch den Fluiddruck im Förderraum, die einzige unbekannte Größe. Daher kann unter Verwendung dieses Modells die Kraft auf das Druckstück durch den Fluiddruck im Förderraum bestimmt werden. Da die Fläche des Druckstückes, welche mit dem Fluiddruck beaufschlagt ist, bekannt ist, kann aus der Kraft der Fluiddruck errechnet werden.

Durch den beschriebenen Entwurf einer nicht linearen Systembeschreibung des elektromagnetischen Dosierpumpensystems ist es möglich, modellbasierte Diagnosemethoden zu verwenden. Hierzu werden die Zustandsgrößen der Systemmodelle ausgewertet und der Druck im Pumpenkopf der elektromagnetischen Dosierpumpe bestimmt. Die notwendigen Strom- und Positionssensoren sind hierbei bereits im Pumpensystem zu regelungstechnischen Zwecken verbaut, sodass die Informationen bereits zur Verfügung stehen, ohne dass der Aufbau der Dosierpumpe ergänzt werden muss. Anhand der zeitlichen Veränderung der Zustandsgrößen und des Drucks im Dosierkopf der Pumpe können anschließend die Diagnosealgorithmen ausgeführt werden.

So kann beispielsweise die modellbasierte Diagnose von prozessseitigem Überdruck sowie die automatisierte Pumpenabschaltung verwirklicht werden.

Die Erkennung der Ventilöffnungs- und Ventilschließzeitpunkte kann beispielsweise über die Bestimmung und Auswertung zeitlicher Gradienten verkoppelter Zustandsgrößen des Systemmodells erfolgen. Ein Über- bzw. Unterschreiten der Zustandsgradienten kann mittels vorgegebener Schranken detektiert werden, was zur Erkennung der Ventilöffnungs- und Ventilschließzeitpunkte führt.

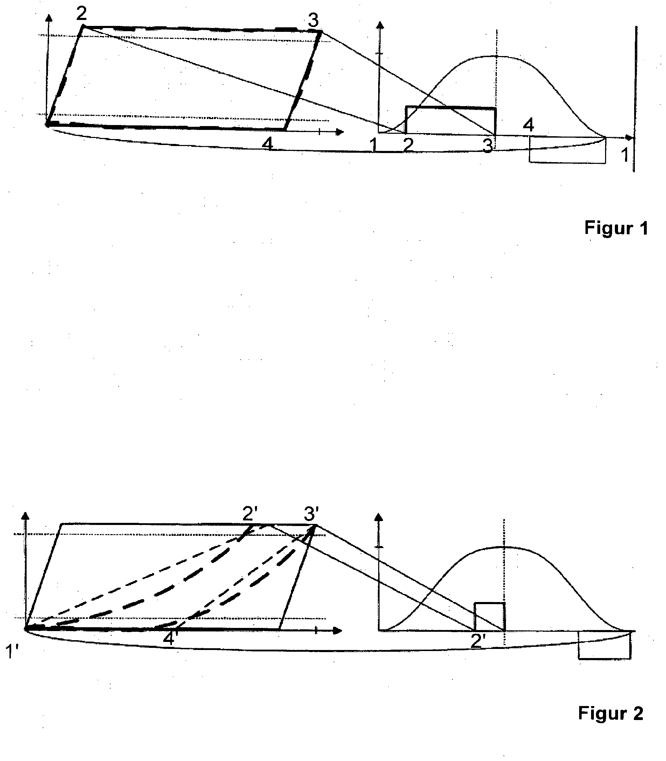

Alternativ dazu, kann auch der Druck in Abhängigkeit von der Position des Druckstückes bestimmt werden und die Ventilöffnungs- und Ventilschließzeitpunkte aus einer Auswertung abgeleitet werden. Ein entsprechendes Druck-Weg-Diagramm ist in Figur 1 links dargestellt. In Figur 1 rechts ist das zugehörige Weg-Zeit-Diagramm dargestellt. Das Weg-Zeit-Diagramm zeigt die zeitabhängige Bewegung des Druckstückes. Man erkennt, dass sich das Druckstück zunächst von einer Ausgangsposition 1 (x=0 mm) nach vorne bewegt und das Volumen der Dosierkammer verkleinert (Druckphase). Das Druckstück durchläuft im Zeitpunkt 3 ein Maximum und bewegt sich dann wieder in Ausgangsposition zurück (Saugphase).

In der Figur 1 links ist das zugehörige Druck-Weg-Diagramm gezeigt. Es wird im Uhrzeigersinn durchlaufen, beginnend im Koordinatenursprung, in der sich das Druckstück in der Position 1 befindet. Während der Druckphase wird der Druck in der Dosierkammer zunächst stark ansteigen bis der Druck in der Lage ist, dass Ventil zur Druckleitung zu Öffnen. Sobald das Druckventil geöffnet ist, bleibt der Druck in der Dosierkammer im Wesentlichen konstant. Der Öffnungspunkt ist mit der Ziffer 2 gekennzeichnet. Ab diesem Zeitpunkt, der auch in Figur 1 rechts eingetragen ist, kommt es zu einer Dosierung. Mit jeder weiteren Bewegung des Druckstückes wird Dosierfluid in die Druckleitung gepumpt. Sobald das Druckstück die Maximalposition (Zeitpunkt 3) erreicht hat, dreht sich die Bewegung des Druckstückes um, das Druckventil schließt sofort und der Druck in der Dosierkammer sinkt wieder ab. Sobald ein Minimaldruck erreicht ist (Zeitpunkt 4) öffnet das Saugventil, welches die Dosierkammer mit der Saugleitung verbindet, und Dosierfluid wird in die Dosierkammer gesaugt, bis wieder die Ausgangsposition erreicht ist.

Die Ventilschließzeitpunkte lassen sich aus dem Weg-Zeit-Diagramm bestimmen, da sie auf den Wegmaxima des Druckstückes liegen. Die Zeitpunkte 2 und 4, d.h die Ventilöffnungszeitpunkte, sind nicht so einfach zu bestimmen, zumal in der Praxis das Druck-Weg-Diagramm abgerundete "Ecken" aufweist. Daher kann beispielsweise ausgehend von Position 1 im Druck-Weg-Diagramm bei Erreichen von 90% des Druckmaximums (bekannt aus Position 3) der Weg abgelesen werden und die Steigung des Druck-Weg-Diagramms zwischen den Punkten 1 und 2 bestimmt werden. Die 90%-Kurve ist punktiert eingezeichnet. Die daraus resultierende Gerade schneidet die Kurve $p=p_{max}$ am Ventilöffnungszeitpunkt. In gleicher Weise kann auch der Zeitpunkt 4 bestimmt werden. Diese Bestimmung kann in jedem Zyklus erfolgen und das Ergebnis für einen späteren Zyklus verwendet werden. Dadurch werden auch Veränderungen der Öffnungszeitpunkte detektiert.

Durch Vergleich der Soll- und Ist-Trajektorien der einzelnen Zustandsgrößen der Systemmodelle können Gasblasen im Hydrauliksystem, Kavitation im Pumpenkopf der Dosiereinheit und/oder Ventilöffnungs- und Ventilschließzeitpunkte der Dosiereinheiten diagnostiziert werden. Insbesondere dann, wenn zwischen den Soll- und Ist-Trajektorien eine vorbestimmte Fehlerschranke überschritten wird, kann dies ein Warnsignal und entsprechende Maßnahmen auslösen.

Ein Beispiel ist in Figur 2 gezeigt. Auch hier ist wieder links das Druck-Weg-Diagramm und rechts das Weg-Zeit-Diagramm dargestellt. Die rechte Figur ist identisch zum entsprechenden Diagramm von Figur 1. Falls sich Gasblasen im Hydrauliksystem befinden, welche kompressibel sind, wird das dazu führen, dass das Druckventil erst zu dem Zeitpunkt 2' öffnet und das Saugventil erst zu dem Zeitpunkt 4' öffnet. Eine deutliche Verschiebung der Ventilöffnungszeitpunkte kann somit zur Diagnostizierung des Zustandes "Luft in der Dosierkammer" verwendet werden. Im Falle von Kavitation verschiebt sich lediglich der Ventilöffnungszeitpunkt 4' nicht jedoch der Ventilöffnungszeitpunkt 2, so dass solch ein Verhalten zur Diagnostizierung des Zustandes "Kavitation" verwendet werden kann.

Die vorgestellte modellbasierte Methodik ermöglicht durch die Analyse der einzelnen verkoppelten Systemzustandsgrößen eine wesentlich umfangreichere und hochwertigere Diagnose als dies bislang verwirklicht worden ist.

Darüber hinaus kann dies mit geringen Sensorikkosten und hoher Zuverlässigkeit und Sicherheit verwirklicht werden. Durch die höhere Diagnosequalität kann der Einsatzbereich von elektromagnetischen Dosierpumpensystemen unter Umständen erweitert werden, da nun die Dosiergenauigkeit extrem verbessert werden kann.

Mit Hilfe des Modells ist es darüber hinaus möglich, zukünftige oder tatsächlich bereits bestehende Abweichungen zwischen der Soll-Kurve und der Ist-Kurve zu erkennen. Zudem kann das Modell verwendet werden, um den voraussichtlichen Einfluss eines Regelungseingriffes zu berechnen.

In Echtzeit wird daher aufgrund der Messung der Stromstärke und der Position des Druckstückes bestimmt, wie sich das System voraussichtlich entwickeln wird. Zudem kann berechnet werden, durch welchen Regelungseingriff, das heißt durch welche Spannungsänderung an der Magnetspule, das System wieder in die gewünschte Richtung bewegt werden kann.

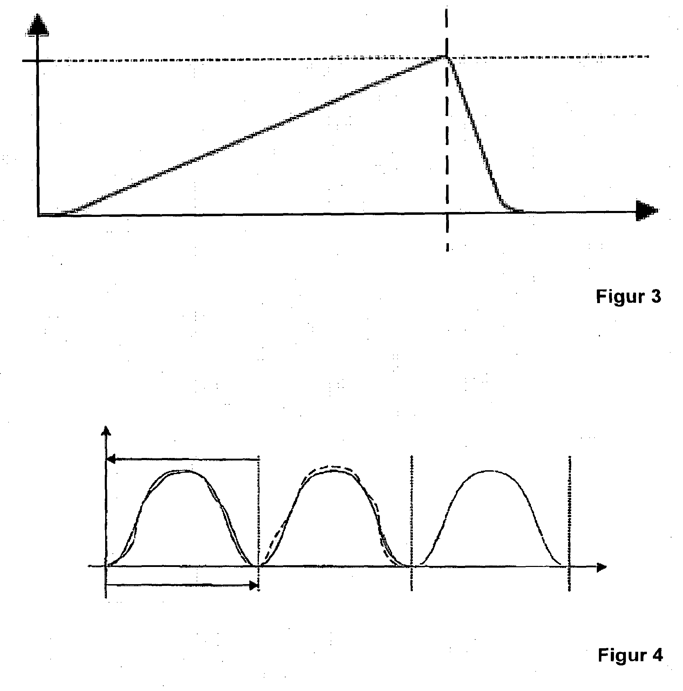

Um eine Bewegung des Druckstückes zu erreichen, wie es in idealisierter Weise in Figur 3 dargestellt ist, muss die Bewegung des Druckstückes geregelt werden.

Selbstverständlich gibt es eine Vielzahl von Möglichkeiten, regelnd in das System einzugreifen. Es können also zu jedem Zeitpunkt stabile Lösungen des dynamischen Systems gesucht werden. Dieser Rechenschritt wird ständig, das heißt so häufig es die zur Verfügung stehende Rechenleistung erlaubt, wiederholt, um eine optimale Regelung zu erhalten.

Bei dem hier vorgeschlagenen Modell ist es im allgemeinen nicht notwendig, zu jedem Zeitpunkt neue stabile Lösungen des dynamischen Systems zu bestimmen. In der Regel ist es ausreichend, die geeignete Korrekturfunktion in Abhängigkeit von den Meßgrößen, d.h. in Abhängigkeit von Position des Druckstückes und der Spannung am Magnetantrieb, einmalig zu bestimmen und diese die Korrekturfunktion fortan für die Regelung zu verwenden.

Trotz dieser Regelung wird es zwangsläufig zu Abweichungen zwischen Soll- und Istwert geben, da das gewählte Modell immer eine Idealisierung darstellt. Zudem sind die erfassten Messgrößen immer fehlerbehaftet (Rauschen).

Um die Differenz zwischen Ist- und Soll-Profil weiter zu reduzieren, wird diese Differenz während eines Druck-Saug-Zykluses gemessen und als Sollprofil für den folgenden Zyklus die Summe aus der gemessenen Differenz und dem gewünschten Sollprofil verwendet. Mit anderen Worten wird ausgenutzt, dass sich der Druck-Hub-Zyklus wiederholt. Es wird somit bei dem folgenden Zyklus ein Sollwert-Profil vorgegeben, dass gegenüber dem eigentlich gewollten Sollwert-Profil abweicht.

Zur Verdeutlichung ist dieses selbstregelnde Prinzip in Figur 4 schematisch dargestellt. Dargestellt ist die Position des Druckstückes auf der Y-Achse und die Zeit auf der X-Achse.

Im ersten Zyklus ist ein für die Regelung verwendetes Sollprofil mit gestrichelter Linie dargestellt. Dieses Sollprofil entspricht dem gewünschten Sollprofil, welches zum Vergleich im dritten Zyklus als Referenzprofil abgebildet ist. Trotz der erfindungsgemäßen modellbasierten Regelung wird das Ist-Profil vom Soll-Profil abweichen. Im ersten Zyklus der Figur 4 ist daher beispielhaft ein Ist-Profil mit durchgezogener Linie dargestellt. Dabei sind die Abweichungen zwischen Ist- und Sollprofil zur Verdeutlichung ausgeprägter dargestellt als sie in der Praxis auftreten.

Im zweiten Zyklus wird dann die Differenz zwischen Ist-Profil des ersten Zyklus und Referenzprofil von dem für den ersten Zyklus verwendeten Sollprofil abgezogen und die Differenz als Sollprofil für die Regelung während des zweiten Zyklus verwendet. Das so erhaltende Sollprofil ist im zweiten Zyklus gestrichelt dargestellt.

Im Idealfall weicht im zweiten Zyklus das Ist-Profil in gleichem Maße vom verwendeten Soll-Profil ab, wie dies im ersten Zyklus beobachtet wurde. Dadurch ergibt sich ein Ist-Profil (mit durchgezogener Linie im zweiten Zyklus eingezeichnet), das dem Referenzprofil entspricht.

Durch den Entwurf eines physikalischen Modells, insbesondere einer nichtlinearen Systembeschreibung des hydraulischen Prozesses im Dosierraum bzw. in der mit dem Dosierraum verbundenen Leitung eines elektromagnetischen Dosierpumpensystemes ist es möglich, modellbasierte Identifikationsmethoden in Echtzeit zu verwenden. Hierzu werden die hydraulischen Parameter, d.h. die Zustandsgrößen der Hydraulikmodelle ausgewertet und die Systemdynamik sowie die Parameter des hydraulischen Prozesses bestimmt.

Als Messgrößen bzw. zu bestimmenden externen Größen dienen die Position des Verdrängerelementes bzw. die daraus ableitbare Geschwindigkeit und Beschleunigung des Verdrängerelementes, und der Druck im Dosierraum, welcher über die durch die Membran auf das Förderfluid ausgeübte Kraft bestimmt werden kann.

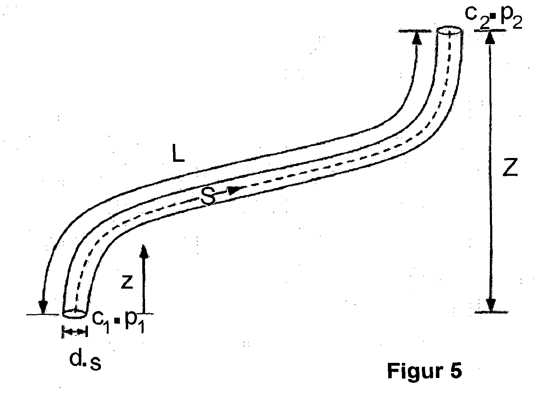

Da in der Regel bei den genannten Verdrängerpumpen die Saugleitung aus einem Schlauch besteht, welcher das Saugventil mit einem Vorratsbehälter verbindet, kann für den Saughub, d.h. während das Druckventil geschlossen und das Saugventil geöffnet ist, das hydraulische System vereinfacht beschrieben werden, wie in Figur 5 dargestellt ist. Die Saugleitung besteht aus einem Schlauch mit dem Durchmesser $D_S$ und der Schlauchlänge L. Der Schlauch überbrückt einen Höhenunterschied Z.

Die nichtlinearen Navier-Stokes-Gleichungen lassen sich vereinfachen, wenn man annimmt, dass die Saugleitung einen konstanten Durchmesser hat und nicht dehnbar ist und dass ein inkompressibles Fluid verwendet wird.

Mit Hilfe von bekannten Optimierungsmethoden wie z.B. dem Gradientenverfahren oder den Levenberg-Marquardt-Algorithmen, werden nun die hydraulischen Parameter bestimmt, die unter Zugrundelegung des aufgestellten Modells die gemessene bzw. bestimmte Position des Druckstückes sowie den gemessenen oder bestimmte Druck im Dosierraum am besten beschreiben können.

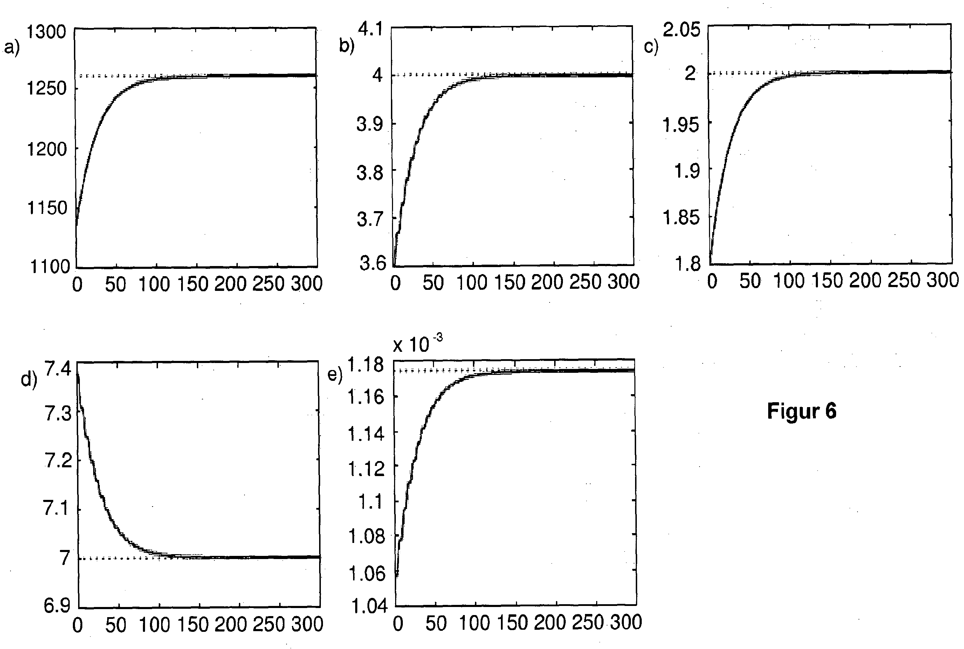

In den Figuren 6a bis 6e sind hier am Beispiel von Glycerin als Förderfluid jeweils ein hydraulischer Parameter (punktierte Linie) sowie die sich aus dem erfindungsgemäßen Verfahren ergebenden Werte (durchgezogene Linie) über der Zeit dargestellt.

So zeigt beispielsweise Figur 6a die Dichte des Förderfluids. Diese beträgt etwa 1260 kg/m$^3$ (punktierte Linie). Man erkennt, dass das erfindungsgemäße Verfahren in der Lage ist, innerhalb von etwa 100 Sekunden die Dichte zu bestimmen. Zwar liegt zum Zeitpunkt t = 0 Sekunden der bestimmte Wert noch deutlich unter dem tatsächlichen Wert. Durch die fortwährende Optimierung nähert sich der durch das erfindungsgemäße Verfahren bestimmte Wert für die Dichte jedoch sehr schnell dem wahren Wert an (durchgezogene Linie).

Gleiches gilt für die Schlauchlänge L (siehe Figur 6b), die Höhendifferenz Z (siehe Figur 6c), den Schlauchdurchmesser (siehe Figur 6d) und die Viskosität (siehe Figur 6e).

Die durch das erfindungsgemäße Verfahren bestimmten Parameter können dann wiederum zusammen mit dem aufgestellten physikalischen Modell dazu verwendet werden, die von dem hydraulischen System auf das Druckstück ausgeübte Kraft zu bestimmen.

Diese Information kann für die erfindungsgemäße Regelung verwendet werden. So kann das entwickelte hydraulische Modell den Einfluss des hydraulischen Systems physikalisch abbilden und dies in Form einer Störgrößenaufschaltung berücksichtigen.

Dies verbessert den Pumpbetrieb von elektromagnetischen Dosierpumpensystemen noch einmal deutlich.

**Patentansprüche**

1. Verfahren zur Bestimmung zumindest einer physikalischen Größe in einer Verdrängerpumpe, wobei die Verdrängerpumpe ein bewegliches Verdrängerelement aufweist, welches den Dosierraum begrenzt, welcher über Ventile mit einer Saug- und Druckleitung verbunden ist, so dass durch eine oszillierende Bewegung des Verdrängerelementes alternierend Förderfluid über die Saugleitung in den Dosierraum gesaugt und über die Druckleitung aus dem Dosierraum gedrückt werden kann, wobei ein Antrieb zur oszillierenden Bewegung des Verdrängerelementes vorgesehen ist, wobei für das Verdrängerelement eine Differentialgleichung basierend auf einem physikalischen Modell aufgestellt wird, zumindest die Position des Verdrängerelementes gemessen wird und mit Hilfe der Differentialgleichung die physikalische Größe bestimmt wird, wobei als physikalische Größe der Fluiddruck p eines in einem Dosierraum einer Verdrängerpumpe befindlichen Förderfluids bestimmt wird, **dadurch gekennzeichnet, dass** die Differentialgleichung eine Bewegungsgleichung ist und, wenn der Ist-Fluiddruck einen vorgegebenen Maximalwert erreicht oder überschreitet, ein Warnsignal ausgegeben wird und das Warnsignal an eine Abschaltautomatik gesendet wird, welche in Antwort auf den Empfang des Warnsignals die Dosierpumpe abschaltet.

2. Verfahren nach Anspruch 1, **dadurch gekennzeichnet, dass** die Verdrängerpumpe eine elektromagnetisch angetriebene Dosierpumpe, vorzugsweise eine elektromagnetisch angetriebene Membranpumpe ist.

3. Verfahren nach Anspruch 2, **dadurch gekennzeichnet, dass** neben der Position des Verdrängerelementes der Strom durch den elektromagnetischen Antrieb gemessen wird, und die Differentialgleichung sowohl die Position des Verdrängerelementes als auch den Strom durch den elektromagnetischen Antrieb als Meßgrößen verwendet, wobei vorzugsweise die Differentialgleichung keine weiteren zu erfassenden Meßgrößen aufweist.

4. Verfahren nach einem der Ansprüche 1 bis 3, **dadurch gekennzeichnet, dass** für einen Bewegungszyklus des Verdrängerelementes eine Soll-Fluiddruckkurve, eine Soll-Positionskurve des Verdrängerelementes und/oder der Soll-Stromverlauf durch den elektromagnetischen Antrieb hinterlegt wird und der Ist-Fluiddruck mit dem Soll-Fluiddruck, die Ist-Position des Verdrängerelementes mit der Soll-Position des Verdrängerelementes und/oder der Ist-Strom durch den elektromagnetischen Antrieb mit einem Soll-Strom durch den elektromagnetischen Antrieb verglichen wird und, wenn die Differenzen zwischen Ist- und Soll-Wert einen vorbestimmtes Kriterium erfüllen, ein Warnsignal ausgegeben werden.

5. Verfahren nach Anspruch 4, **dadurch gekennzeichnet, dass** eine gewichtete Summe der relativen Abweichungen vom Soll-Wert bestimmt wird und das Kriterium derart gewählt wird, dass ein Warnsignal ausgegeben wird, wenn die gewichtete Summe einen vorbestimmten Wert überschreitet.

6. Verfahren nach Anspruch 4 oder 5, **dadurch gekennzeichnet, dass** mehrere Kriterien vorbestimmt werden, jedem Kriterium ein Fehlerereignis zugeordnet ist und, wenn ein Kriterium erfüllt ist, das zugeordnete Fehlerereignis diagnostiziert wird.

7. Verfahren nach einem der Ansprüche 1 bis 6, **dadurch gekennzeichnet, dass** als physikalische Größe die Masse $m$ des Verdrängerelementes, die Federkonstante $k$ der das Verdrängerelement vorspannenden Feder, die Dämpfung d und/oder der elektrische Widerstand $R_{Cu}$ des elektromagnetischen Antriebs bestimmt wird.

8. Verfahren nach einem der Ansprüche 1 bis 7, **dadurch gekennzeichnet, dass** für den Antrieb eine modellbasierte Regelung verwendet wird, wobei vorzugsweise die Differentialgleichung für die modellbasierte Regelung verwendet wird.

9. Verfahren nach Anspruch 8, **dadurch gekennzeichnet, dass** als Modell ein nichtlineares Zustandsraummodell gewählt wird, wobei die nichtlineare Regelung entweder über Control-Lyapunov-Funktionen, über flachheitsbasierte Regelungsmethoden mit flachheitsbasierter Vorsteuerung, über Integrator-Backsteppping-Methoden, über Sliding-Mode-Methoden oder über prädiktive Regelung erfolgt, wobei die nichtlineare Regelung über Control-Lyapunov-Funktionen bevorzugt ist.

10. Verfahren nach einem der Ansprüche 8 bis 9, **dadurch gekennzeichnet, dass** die Differenz zwischen dem erfassten Ist-Positionsprofil des Verdrängerelement und einem vorbestimmten Soll-Positionsprofil des Verdrängerelementes während eines Saug-Druck-Zyklus erfasst wird und als Sollwertprofil für den nächsten Saug-Druck-Zyklus die Differenz aus zumindest einem Teil der erfassten Differenz und dem vorbestimmten Soll-Positionsprofil verwendet wird.

11. Verfahren nach einem der Ansprüche 1 bis 10, **dadurch gekennzeichnet, dass** hydraulische Parameter in der Verdrängerpumpe bestimmt werden, für das hydraulische System ein physikalisches Modell mit hydraulischen Parametern aufgestellt wird, die von dem Verdrängerelement auf das im Dosierraum befindliche Fluid ausgeübte Kraft oder der Druck im Dosierraum sowie die Position des Verdrängerelement bestimmt wird und mit Hilfe einer Optimierungsrechnung zumindest ein hydraulischer Parameter errechnet wird.

12. Verfahren nach Anspruch 11, **dadurch gekennzeichnet, dass** als hydraulischer Parameter die Dichte des Fluids im Dosierraum und/oder die Viskosität des Fluides im Dosierraum bestimmt wird.

13. Verfahren nach Anspruch 11 oder 12, **dadurch gekennzeichnet, dass** das physikalische Modell für den Fall, dass das Ventil zur Saugleitung geöffnet und das Ventil zur Druckleitung geschlossen ist, und/oder für den Fall, dass das Ventil zur Saugleitung geschlossen und das Ventil zur Druckleitung geöffnet ist, aufgestellt wird, wobei falls das physikalische Modell sowohl für den Fall, dass das Ventil zur Saugleitung geöffnet und das Ventil zur Druckleitung geschlossen ist, als auch für den Fall, dass das Ventil zur Saugleitung geschlossen und das Ventil zur Druckleitung geöffnet ist, aufgestellt wird, die Ventilöffnungszeitpunkte bestimmt werden, und das physikalische Modell in Abhängigkeit von dem Ergebnis der Bestimmung der Ventilöffnungszeitpunkte ausgewählt wird.

14. Verfahren nach einem der Ansprüche 11 bis 13, **dadurch gekennzeichnet, dass** nach der Bestimmung des hydraulischen Parameters, dieser und das physikalische Modell zur Bestimmung der von dem Förderfluid auf das Verdrängerelement ausgeübten Kraft verwendet wird und die derart bestimmte Kraft bei einer Regelung der Bewegung des Verdrängerelementes verwendet wird.

**Claims**

1. A method of determining at least one physical variable in a positive displacement pump, wherein the positive displacement pump has a moveable displacer element delimiting the metering chamber which is connected by way of valves to a suction and a pressure line so that delivery fluid can alternately be sucked into the metering chamber by way of the suction line and urged out of the metering chamber by way of the pressure line by an oscillating movement of the displacer element, wherein there is provided a drive for the oscillating movement of the displacer element, wherein for the displacer element a differential equation is established based on a physical model, at least the position of the displacer element is measured and the physical variable is determined by means of the differential equation, wherein the fluid pressure p of a delivery fluid in a metering chamber of a positive displacement pump is determined as the physical variable, **characterised in that** the differential equation is an equation of motion and if the actual fluid pressure reaches or exceeds a predetermined maximum value a warning signal is output and the warning signal is sent to an automatic shut-down arrangement which shuts down the metering pump in response to reception of the warning signal.

2. A method as set forth in claim 1 **characterised in that** the positive displacement pump is an electromagnetically driven metering pump, preferably an electromagnetically driven diaphragm pump.

3. A method as set forth in claim 2 **characterised in that** besides the position of the displacer element the current through the electromagnetic drive is measured and the differential equation uses both the position of the displacer element and also the current through the electromagnetic drive as measurement variables, wherein preferably the differential equation does not have any further measurement variables to be detected.

4. A method as set forth in one of claims 1 through 3 **characterised in that** for a movement cycle of the displacer element a target fluid pressure curve, a target position curve of the displacer element and/or the target current pattern through the electromagnetic drive is provided and the actual fluid pressure is compared to the target fluid pressure, the actual position of the displacer element is compared to the target position of the displacer element and/or the actual current through the electromagnetic drive is compared to a target current through the electromagnetic drive and a warning signal is output if the differences between the actual and target values satisfy a predetermined criterion.

**5.** A method as set forth in claim 4 **characterised in that** a weighted sum of the relative deviations from the target value is determined and the criterion is so selected that a warning signal is output if the weighted sum exceeds a predetermined value.

**6.** A method as set forth in claim 4 or claim 5 **characterised in that** a plurality of criteria are predetermined, a fault event is associated with each criterion and, if a criterion is fulfilled, the associated fault event is diagnosed.

**7.** A method as set forth in one of claims 1 through 6 **characterised in that** the mass m of the displacer element, the spring constant k of the spring prestressing the displacer element, the damping d and/or the electrical resistance $R_{Cu}$ of the electromagnetic drive is determined as the physical variable.

**8.** A method as set forth in one of claims 1 through 7 **characterised in that** a model-based control is used for the drive, wherein preferably the differential equation is used for the model-based control.

**9.** A method as set forth in claim 8 **characterised in that** a non-linear state space model is selected as the model, wherein the non-linear control is effected either by way of control-Lyapunov functions, by way of flatness-based control methods with flatness-based precontrol, by way of integrator backstepping methods, by way of sliding mode methods or by way of predictive control, wherein non-linear control by way of control-Lyapunov functions is preferred.

**10.** A method as set forth in one of claims 8 to 9 **characterised in that** the difference between the detected actual position profile of the displacer element and a predetermined target position profile of the displacer element is detected during a suction-pressure cycle and the difference of at least a part of the detected difference and the predetermined target position profile is used as the target value profile for the next suction-pressure cycle.

**11.** A method as set forth in one of claims 1 through 10 **characterised in that** hydraulic parameters in the positive displacement pump are determined, for the hydraulic system a physical model is established with hydraulic parameters, the force exerted by the displacer element on the fluid in the metering chamber or the pressure in the metering chamber as well as the position of the displacer element is determined and at least one hydraulic parameter is calculated by means of an optimization calculation.

**12.** A method as set forth in claim 11 **characterised in that** the density of the fluid in the metering chamber and/or the viscosity of the fluid in the metering chamber is determined as the hydraulic parameter.

**13.** A method as set forth in claim 11 or claim 12 **characterised in that** the physical model is set up for the situation where the valve to the suction line is opened and the valve to the pressure line is closed and/or for the situation where the valve to the suction line is closed and the valve to the pressure line is opened, wherein if the physical model is set up both for the situation where the valve to the suction line is opened and the valve to the pressure line is closed and also for the situation where the valve to the suction line is closed and the valve to the pressure line is opened, the valve opening times are determined, and the physical model is selected in dependence on the result of determining the valve opening times.

**14.** A method as set forth in one of claims 11 through 13 **characterised in that** after determination of the hydraulic parameter same and the physical model is used for determining the force exerted by the delivery fluid on the displacer element and the force determined in that way is used in a control of the movement of the displacer element.

**Revendications**

**1.** Procédé pour déterminer au moins une valeur physique dans une pompe à déplacement positif, dans lequel la pompe à déplacement positif présente un élément déplaceur mobile qui délimite l'espace de dosage, lequel est relié à une conduite d'aspiration et de refoulement par le biais de soupapes, si bien que par un mouvement oscillant de l'élément déplaceur, du fluide de circulation peut en alternance être aspiré dans l'espace de dosage par le biais de la conduite d'aspiration et être refoulé hors de l'espace de dosage par le biais de la conduite de refoulement, dans lequel un entraînement est prévu pour le mouvement oscillant de l'élément déplaceur, dans lequel une équation différentielle est posée pour l'élément déplaceur sur la base d'un modèle physique, au moins la position de l'élément déplaceur étant mesurée et la valeur physique étant déterminée à l'aide de l'équation différentielle, dans lequel la pression de fluide p d'un fluide de transport se trouvant dans un espace de dosage d'une pompe à déplacement positif est déterminée en tant que valeur physique, **caractérisé en ce que** l'équation différentielle est une équation

EP 3 039 287 B1

de mouvement et **en ce que**, lorsque la pression de fluide réelle atteint ou dépasse une valeur maximum prédéfinie, un signal d'avertissement est émis et le signal d'avertissement est envoyé à un automate de coupure qui coupe la pompe de dosage en réponse à la réception du signal d'avertissement.

2. Procédé selon la revendication 1, **caractérisé en ce que** la pompe à déplacement positif est une pompe de dosage à entraînement électromagnétique, de préférence une pompe à membrane à entraînement électromagnétique.

3. Procédé selon la revendication 2, **caractérisé en ce qu'**en plus de la position de l'élément déplaceur, on mesure le courant à travers l'entraînement électromagnétique, et **en ce que** l'équation différentielle utilise aussi bien la position de l'élément déplaceur que le courant à travers l'entraînement électromagnétique en tant que valeurs de mesure, l'équation différentielle ne présentant de préférence pas d'autres valeurs de mesure à détecter.

4. Procédé selon l'une des revendications 1 à 3, **caractérisé en ce qu'**une courbe de pression de fluide de consigne, une courbe de position de consigne de l'élément déplaceur et/ou le tracé du courant de consigne à travers l'entraînement électromagnétique est(sont) enregistrée(s) pour un cycle de mouvement de l'élément déplaceur, et **en ce que** la pression de fluide réelle est comparée avec la pression de fluide de consigne, la position réelle de l'élément déplaceur est comparée avec la position de consigne de l'élément déplaceur et/ou le courant réel à travers l'entraînement électromagnétique est comparé avec un courant de consigne à travers l'entraînement électromagnétique, et **en ce qu'**un signal d'avertissement est émis lorsque les différences entre la valeur réelle et la valeur de consigne remplissent un critère prédéterminé.

5. Procédé selon la revendication 4, **caractérisé en ce qu'**une somme pondérée des écarts relatifs par rapport à la valeur de consigne est déterminée, et **en ce que** le critère est sélectionné de sorte qu'un signal d'avertissement est émis lorsque la somme pondérée dépasse une valeur prédéterminée.

6. Procédé selon la revendication 4 ou 5, **caractérisé en ce que** plusieurs critères sont prédéterminés, **en ce qu'**un événement d'erreur est associé à chaque critère et **en ce que** lorsqu'un critère est rempli, l'événement d'erreur associé est diagnostiqué.

7. Procédé selon l'une des revendications 1 à 6, **caractérisé en ce que** la masse $m$ de l'élément déplaceur, la constante de rappel $k$ du ressort qui précontraint l'élément déplaceur, l'amortissement $d$ et/ou la résistance électrique $R_{Cu}$ de l'entraînement électromagnétique est(sont) déterminé(e)(s) en tant que valeur physique.

8. Procédé selon l'une des revendications 1 à 7, **caractérisé en ce qu'**une régulation basée sur un modèle est utilisée pour l'entraînement, suite à quoi on utilise de préférence l'équation différentielle pour la régulation basée sur un modèle.

9. Procédé selon la revendication 8, **caractérisé en ce qu'**un modèle d'espace d'état non linéaire est sélectionné en tant que modèle, la régulation non linéaire ayant lieu par le biais de fonctions de contrôle de Lyapunov, par le biais de méthodes de régulation basées sur la planéité avec commande préalable basée sur la planéité, par le biais de méthodes d'intégrateur de backstepping, par le biais de méthodes par mode glissant ou par le biais d'une régulation prédictive, la régulation non linéaire par le biais de fonctions de contrôle de Lyapunov étant privilégiée.

10. Procédé selon l'une des revendications 8 à 9, **caractérisé en ce que** la différence entre le profil de position réel détecté de l'élément déplaceur et un profil de position de consigne prédéterminé de l'élément déplaceur est détectée pendant un cycle d'aspiration-refoulement, et **en ce que** la différence entre au moins une partie de la différence détectée et le profil de position de consigne prédéterminé est utilisée en tant que profil de valeur de consigne pour le cycle d'aspiration-refoulement suivant.

11. Procédé selon l'une des revendications 1 à 10, **caractérisé en ce que** des paramètres hydrauliques sont déterminés dans la pompe à déplacement positif, **en ce qu'**un modèle physique avec des paramètres hydrauliques est posé pour le système hydraulique, **en ce que** la force exercée par l'élément déplaceur sur le fluide se trouvant dans l'espace de dosage ou la pression dans l'espace de dosage ainsi que la position de l'élément déplaceur sont déterminées, et **en ce qu'**au moins un paramètre hydraulique est calculé à l'aide d'un calcul d'optimisation.

12. Procédé selon la revendication 11, **caractérisé en ce que** la densité du fluide dans l'espace de dosage et/ou la viscosité du fluide dans l'espace de dosage est(sont) déterminée(s) en tant que paramètre hydraulique.

13

**13.** Procédé selon la revendication 11 ou 12, **caractérisé en ce que** le modèle physique est posé pour le cas dans lequel la soupape vers la conduite d'aspiration est ouverte et la soupape vers la conduite de refoulement est fermée, et/ou pour le cas dans lequel la soupape vers la conduite d'aspiration est fermée et la soupape vers la conduite de refoulement est ouverte, suite à quoi si le modèle physique est posé aussi bien pour le cas dans lequel la soupape vers la conduite d'aspiration est ouverte et la soupape vers la conduite de refoulement est fermée que pour le cas dans lequel la soupape vers la conduite d'aspiration est fermée et la soupape vers la conduite de refoulement est ouverte, les moments d'ouverture de soupape sont déterminés, et le modèle physique est sélectionné en fonction du résultat de la détermination des moments d'ouverture de soupape.

**14.** Procédé selon l'une des revendications 11 à 13, **caractérisé en ce qu'**après la détermination du paramètre hydraulique, celui-ci et le modèle physique sont utilisés pour déterminer la force exercée par le fluide de refoulement sur l'élément déplaceur, et la force ainsi déterminée est utilisée lors d'une régulation du mouvement de l'élément déplaceur.

Figur 1

Figur 2

**Figur 3**

**Figur 4**

**Figur 5**

**Figur 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1757809 A

- EP 2557287 A2

**In der Beschreibung aufgeführte Nicht-Patentliteratur**

- **KASA et al.** Modelling of novel type diaphragm pump. *IEEE International Conference on Networking, Sensing and Control,* 2009, 647 ff